# EUROPEAN PATENT APPLICATION

(11) **EP 4 372 878 A1**
(43) Date of publication of application: **22.05.2024**
(21) Application number: 23202806.8
(22) Date of filing: 10.10.2023
(51) Int. Cl.: H01M 50/204, H01M 50/209, H01M 50/503, H01M 50/572, H01M 50/574, H01M 50/588, H01M 50/598, H01M 10/54

(54) **BATTERY MODULE AND METHOD FOR DISASSEMBLING THE SAME**

(30) Priority: 18.11.2022 JP 2022184553
(71) Applicant: Prime Planet Energy & Solutions, Inc., Chuo-ku Tokyo 103-0022 (JP)
(72) Inventor: ITOH, Yusuke, Tokyo, 103-0022 (JP)
(74) Representative: Kuhnen & Wacker Patent- und Rechtsanwaltsbüro PartG mbB

(57) **Abstract**

Provided is a battery module enabling accurate cutting of a bus bar without damage to secondary batteries. A battery module disclosed here includes a plurality of secondary batteries, and a bus bar electrically connecting the secondary batteries. Each of the secondary batteries includes a battery case. The battery module is provided with information on a cut position of the bus bar in disassembling the battery module.

## Description

### TECHNICAL FIELD

The present disclosure relates to a battery module. The present disclosure also relates to a method for disassembling the battery module.

### BACKGROUND ART

Secondary batteries such as lithium ion secondary batteries have been favorably used for, for example, power supplies for driving vehicles. For application as the power supplies for driving vehicles, secondary batteries are typically used in the form of a battery module in which a plurality of secondary batteries (i.e., cells) are electrically connected by a bus bar (see Patent Document 1).

To utilize resources effectively with reduction of wastes, used battery modules are collected and recycled. For the recycle, first, a bus bar of a battery module is cut so that the battery module is disassembled into cells.

### CITATION LIST

### PATENT DOCUMENT

Patent Document 1: JP2010-212155A

### SUMMARY OF INVENTION

In cutting the bus bar of the battery module, secondary batteries might be damaged. Since secondary batteries included in the battery module can be in a charged state, damage to the secondary batteries is required to be as small as possible. Thus, a technique capable of cutting a bus bar accurately without damage to secondary batteries has been demanded.

Embodiments of the present disclosure provide battery modules each enabling accurate cutting of a bus bar without damage to secondary batteries.

A battery module disclosed here includes: a plurality of secondary batteries; and a bus bar electrically connecting the plurality of secondary batteries. Each of the plurality of secondary batteries includes a battery case. The battery module is provided with information on a cut position of the bus bar in disassembling the battery module.

This configuration enables accurate cutting of the bus bar without damage to the secondary batteries.

In another aspect, a method for disassembling a battery module disclosed here includes: preparing a battery module in which a plurality of secondary batteries are electrically connected by a bus bar, where each of the plurality of secondary batteries includes a battery case and the battery module is provided with information on a cut position of a bus bar in disassembling the battery module; determining the cut position; and cutting the bus bar at the cut position.

This configuration enables accurate cutting of the bus bar without damage to the secondary batteries.

### BRIEF DESCRIPTION OF THE DRAWINGS

FIG. 1 is a perspective view schematically illustrating a battery module according to a first embodiment.
FIG. 2 is a perspective view schematically illustrating a cell of the battery module according to the first embodiment.
FIG. 3 is a perspective view schematically illustrating an example of a bus bar of the battery module according to the first embodiment.
FIG. 4 is a schematic view of a configuration in which the battery module according to the first embodiment includes a bus bar plate.
FIG. 5 is a schematic view of a configuration in which spacers of the battery module according to the first embodiment protect side surfaces of cells.
FIG. 6 is a perspective view schematically illustrating an example of a cell of a battery module according to a second embodiment.
FIG. 7 is a perspective view schematically illustrating an example of a bus bar of a battery module according to a third embodiment.
FIG. 8 is a perspective view schematically illustrating another example of the bus bar of the battery module according to the third embodiment.

### DESCRIPTION OF PREFERRED EMBODIMENTS

Embodiments of the present disclosure will be described hereinafter with reference to the drawings. Matters not specifically mentioned herein but required for carrying out the present disclosure can be understood as matters of design of a person skilled in the art based on related art in the field. The present disclosure can be carried out on the basis of the contents disclosed in the description and common general knowledge in the field. In the drawings, members and parts having the same functions are denoted by the same reference characters for description. Dimensional relationships (e.g., length, width, and thickness) in the drawings do not reflect actual dimensional relationships. A numerical range expressed as "A to B" herein includes A and B.

A "secondary battery" herein refers to a storage device enabling repetitive charging and discharging. A "lithium ion secondary battery" herein refers to a secondary battery that uses lithium ions as charge carriers and performs charge and discharge by movement of charges accompanying lithium ions between positive and negative electrodes.

### FIRST EMBODIMENT

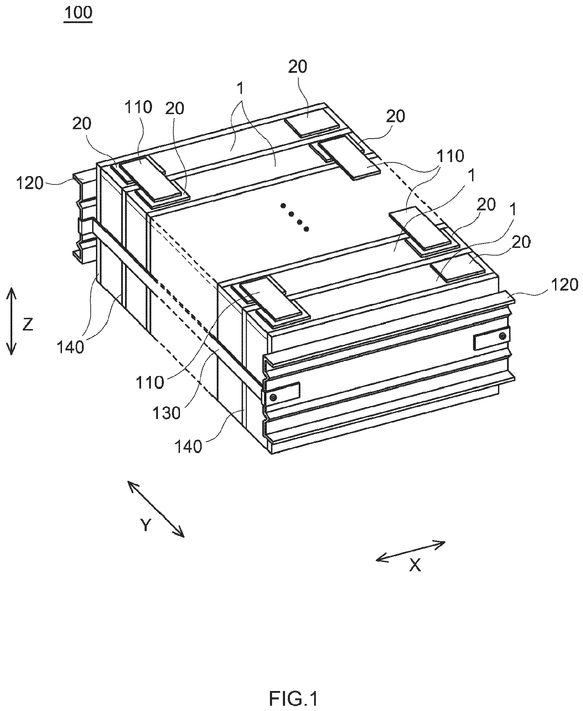

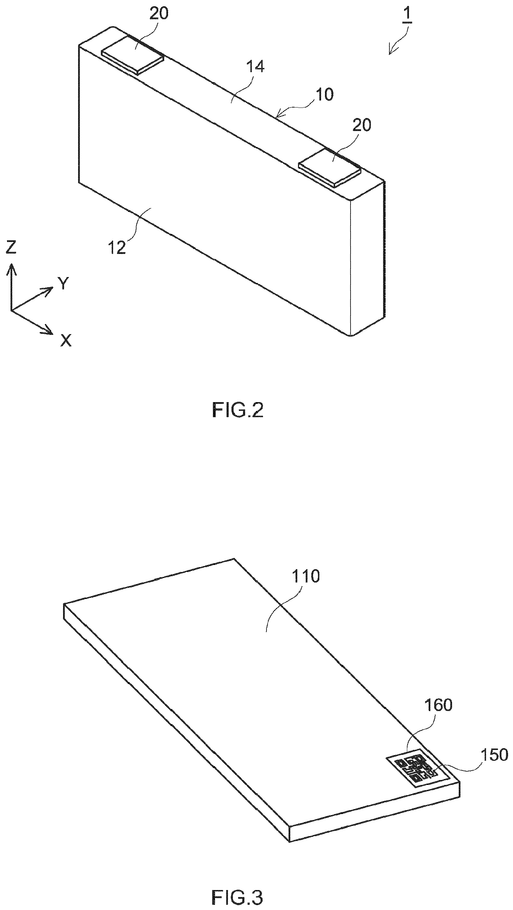

As an example of a battery module disclosed here, a battery module according to a first embodiment will be described hereinafter with reference to FIGS. 1 through 3. FIG. 1 is a perspective view schematically illustrating the battery module according to the first embodiment. FIG. 2 is a perspective view schematically illustrating a cell of the battery module according to the first embodiment. FIG. 3 is a perspective view schematically illustrating a bus bar of the battery module according to the first embodiment.

### (Battery Module)

As illustrated in FIG. 1, a battery module 100 according to this embodiment includes a plurality of cells 1 arranged along a predetermined arrangement direction. Specifically, in the battery module 100, the cells 1 each including a flat rectangular battery case 10 (see FIG. 2) are arranged along a depth direction Y with flat surfaces thereof facing each other. Thus, the depth direction Y is the arrangement direction of the cells 1. In the battery module 100 according to this embodiment, the cells 1 arranged therein are electrically connected by bus bars 110.

In the illustrated example, a pair of end plates 120 are disposed at both outer sides of the battery module 100 in the arrangement direction (depth direction Y). The pair of end plates 120 is bridged by a binding beam member 130 so that the cells 1 are tied together in the arrangement direction. In the illustrated example, to uniformize a tying pressure in the flat surfaces of the cells 1, spacers 140 are disposed each between adjacent ones of the cells 1. The end plates 120, the binding beam member 130, and the spacers 140 are optional.

### (Bus Bar)

The bus bars 110 are conductive members enabling electrical connection among the cells 1. As illustrated in FIG. 1, the cells 1 are arranged such that electrode terminals 20 are located adjacent to each other in the depth direction Y, and the bus bars 110 are disposed such that each of the bus bars 110 bridges adjacent ones of the electrode terminals 20. The cells 1 are electrically connected through the bus bars 110 to thereby constitute the battery module 100.

The bus bars 110 and the electrode terminals 20 are joined by surface contact. This joint is made by, for example, laser welding. It should be noted that a material used for the bus bars 110 can be, but is not limited to, a metal material having high conductivity and high strength, such as aluminum or an aluminium alloy. Each of the bus bars 110 has a flat plate shape, but the shape of each bus bar 110 is not limited to this example.

In the first embodiment, the bus bars 110 are provided with information on a cut position in disassembling the battery module 100. In the first embodiment, the information on a cut position is provided by, for example, attachment, printing, or engraving. In the example illustrated in FIG. 3, a seal 160 including information on a cut position is attached to the bus bar 110.

The cut position in disassembling the battery module 100 is typically a position between one of the cells 1 and its adjacent cell 1 in the depth direction Y (i.e., arrangement direction of the cells 1) without damage to the cells 1 in cutting. Thus, it is advantageous that a distance is kept between these adjacent cells 1, and it is more advantageous that a space is kept between the adjacent cells 1 by the spacer 140.

The information on a cut position may be a code such as a character code, a one-dimensional code (e.g., bar code), or a two-dimensional code (e.g., QR code (registered trademark)); or an RFID. In the illustrated example, a QR code (registered trademark) 150 is printed on the seal 160 as information on a cut position. The seal 160 is advantageous because of capability of providing information on a cut position after the battery module 100 is completed. It should be noted that the "seal" herein is a term including a "decal" and a "label."

However, in a case where information on a cut position is coded, this code may be directly printed or engraved on the bus bar 110. As another method for providing the bus bar 110 with information on a cut position, a continuous line or a dashed line may be printed on a cut position on the bus bar 110.

To enable reading of information on a cut position, the information on a cut position is typically provided to an exposed portion of the bus bar 110 in the configuration of the battery module 100. Thus, in the illustrated example, information on a cut position is provided to an exposed surface of the bus bar 110, that is, an upper surface of the bus bar 110, in order to ease recognition. However, in the case of using a seal-type RFID tag, for example, the information may not be provided to the exposed surface of the bus bar 110. In such a case, the information can also be read. It should be noted that the battery module 100 is typically placed with a surface having the electrode terminals 20 facing upward. A surface facing upward in a normal installation configuration of the battery module 100 herein will be referred to as an "upper surface." Similarly, in the normal installation configuration of the battery module 100, a surface facing laterally will be referred to as a "side surface."

In the battery module 100, information on a cut position may be provided to only one bus bar 110, or may be provided to a plurality of (especially all) bus bars 110.

### (Cell)

The cells 1 are secondary batteries. As illustrated in FIG. 2, each of the cells 1 includes the battery case 10 and the electrode terminals 20. Each cell 1 includes an electrode body (not shown) and an electrolyte (not shown) in the battery case 10. The number of the cells 1 constituting the battery module 100 is not particularly limited, and may be changed depending on purposes (e.g., required electric power and/or technical standards of external equipment) of the battery module 100.

The electrode body is a power generation element housed in the battery case 10. A configuration of the electrode body is not particularly limited, and various configurations that can be employed for typical secondary batteries can be employed without any particular limitation. For example, the electrode body can employ a configuration in which a positive electrode and a negative electrode are stacked with a separator interposed therebetween. Specific examples of the configuration of the electrode body of this type include a wound electrode body in which a long band-shaped positive electrode, a long band-shaped negative electrode, and long band-shaped separators are stacked and wound, and a stacked-type electrode body in which rectangular sheet-shaped positive electrodes, rectangular sheet-shaped negative electrodes, and separators are laminated. It should be noted that specific configurations and specific materials of members (positive electrode, negative electrode, and separator) constituting the electrode body can be those that can be employed for typical secondary batteries (e.g., lithium ion secondary batteries) without any particular limitation, and do not limit the technique disclosed here, and thus, detailed description thereof is omitted here.

As the electrolyte, a nonaqueous liquid electrolyte (i.e., nonaqueous electrolyte) including a nonaqueous solvent and a supporting electrolyte, and a solid electrolyte obtained by molding a powdery electrolyte into a sheet shape, may be used. Specific components of the electrolyte do not limit the technique disclosed here, and thus, detailed description thereof is omitted here.

The battery case 10 is a container that accommodates the electrode body and the electrolyte described above. As illustrated in FIG. 2, the battery case 10 is a flat rectangular container. The flat rectangular battery case 10 described above includes a flat rectangular case body 12 whose upper surface is open, and a plate-shaped lid 14 covering an opening in the upper surface of the case body 12. It should be noted that the outer shape of the battery case is not limited to the shape described above, and may be changed as appropriate depending on technical standards of external equipment, the shape of the electrode body, and so forth. A material for the battery case 10 is not particularly limited as long as the material has a desired strength. Desired examples of the material for the battery case 10 include metal materials that are lightweight and have high thermal conductivity (e.g., aluminum, aluminum alloy, stainless steel, and nickel plating steel).

As illustrated in FIG. 1, each of the cells 1 includes a pair of electrode terminals 20 coupled to the bus bar 110. The electrode terminals 20 are attached to the lid 14 of the battery case 10. The electrode terminals 20 are electrically connected to the electrode body in the battery case 10. In the battery case 10, one of the pair of electrode terminals 20 is electrically connected to the positive electrode and the other electrode terminal 20 is electrically connected to the negative electrode.

The battery module 100 can be used for various applications, and is desirably used as power supplies for driving vehicles such as battery electric vehicles (BEVs), hybrid electric vehicles (HEVs), and plug-in hybrid electric vehicles (PHEVs).

In the first embodiment, the bus bar 110 is provided with information on a cut position that avoids damage to the cells 1, and thus, a cut position can be correctly determined by reading the information, and accordingly, the bus bar 110 can be accurately cut without damage to the cells 1. Thus, the bus bar 110 can be quickly cut the bus bars 110 with safety to disassemble the battery module 100.

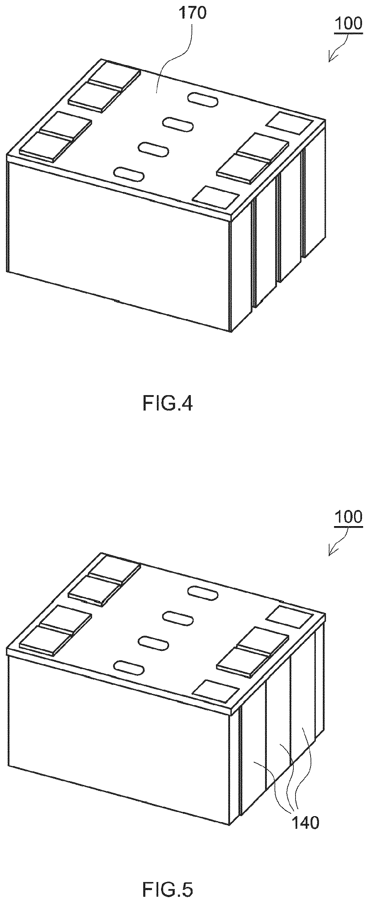

It should be noted that in the battery module 100, from the viewpoint of insulation between the bus bar 110 and the battery case 10, prevention of application of stress to the bus bar 110 upon application of an impact, and fixing of the position in joining the bus bar 110, for example, a resin cover (also referred to as a bus bar plate) is disposed between the bus bar 110 and the lid 14 of the battery case 10 in some cases. This configuration is schematically illustrated in FIG. 4. As illustrated in FIG. 4, a bus bar plate 170 covers the upper surfaces of the cells 1 (the lid 14 of the battery case 10) with the upper surfaces of the bus bars 110 exposed.

On the other hand, from the viewpoint of protection against an impact on the battery case 10, for example, each of the spacer 140 has its both ends bent or has a T shape such that the spacer 140 cover the side surface of the battery case 10 in some cases. This configuration is schematically illustrated in FIG. 5.

In such a situation, the cells 1 are hidden by the bus bar plate 170 and/or the spacers 140, and thus, it is difficult to determine a cut position of the bus bar 110 (i.e., a position between the cells 1 adjacent to each other in the arrangement direction of the cells 1). On the other hand, in various configurations of the battery module 100, the upper surfaces of the bus bars 110 are most likely to be exposed. In view of these, as described in the first embodiment, it is significantly advantageous to provide information on a cut position to the bus bars 110.

### SECOND EMBODIMENT

A second embodiment is different from the first embodiment in that the battery cases of the cells are provided with information on a cut position, whereas a typical bus bar (i.e., bus bar not provided with information on a cut position) is used as the bus bar 110. Matters already described in the first embodiment will not be described again. In the second embodiment, information on a cut position is provided to the battery cases by, for example, attachment, printing, or engraving.

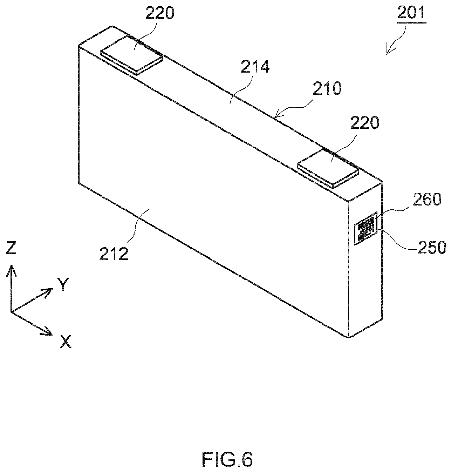

FIG. 6 is a perspective view of an example of a cell (i.e., secondary battery) for use in a battery module according to the second embodiment. As illustrated in FIG. 6, a cell 201 includes a flat rectangular battery case 210 including a case body 212 and a lid 214. A seal 260 including information on a cut position is attached to the battery case 210 of the cell 201. Specifically, a seal 260 on which a QR code (registered trademark) 250 is printed is attached to a side surface of the case body 212 of the battery case 210 along a depth direction Y. The seal 260 is advantageous because of capability of providing information on a cut position after the battery module 100 is completed.

On this side surface, the position to which the seal 260 is attached is a position exposed in the configuration of the battery module. Since the seal 260 is exposed in the battery module, the information on a cut position (QR code (registered trademark) 250 in this embodiment) can be easily read.

It should be noted that as long as the battery case 210 is provided with the information on a cut position, the position to which the information on a cut position is provided is not limited to the example described above. For example, the information on a cut position may be provided (e.g., a seal is attached) to the upper surface of the battery case 210 (i.e., on the lid 214 of the battery case 210). The position on the upper surface of the battery case 210 to which the information on a cut position is provided may be located between electrode terminals 220. Since the upper surface of the battery case 210 is exposed in the configuration of the battery module, the position to which the seal 260 is attached is a position exposed in the configuration of the battery module. Thus, in this case, the information on a cut position (QR code (registered trademark) 250 in this embodiment) can also be read easily.

In the illustrated example, the QR code (registered trademark) 250 is used as information on a cut position, but the contents of the information on a cut position may be other codes or a REID mentioned as examples in the first embodiment.

In the battery module, the information on a cut position may be provided to only one cell 201 or may be provided to a plurality of (especially all the) cells 201.

In the second embodiment, since the battery case 210 includes information on a cut position that avoids damage to the cells 201, the cut position can be correctly determined by reading the information, and accordingly, the bus bar can be accurately cut without damage to the cells 201. As a result, the bus bar can be quickly cut with safety to disassemble the battery module.

### THIRD EMBODIMENT

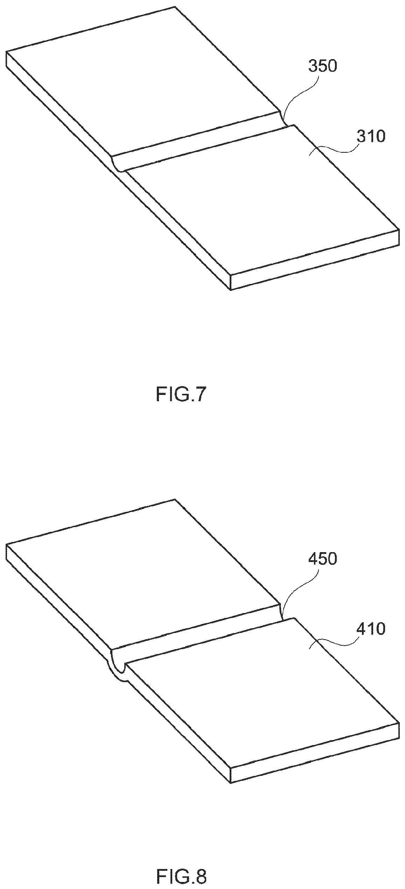

A third embodiment is different from the first embodiment in using a bus bar in which a groove is provided at a position to be cut, instead of the bus bar 110. Accordingly, in the third embodiment, information on a cut position is provided by forming the groove in the bus bar. Matters already described in the first embodiment will not be described again. FIGS. 7 and 8 illustrate examples of a bus bar for use in a battery module according to the third embodiment.

A bus bar 310 illustrated in FIG. 7 has a flat plate shape, and a groove 350 is provided at a position to be cut. The position to be cut is typically a bottom portion of the groove 350. Thus, the bus bar 310 is thin in a portion where the groove 350 is formed. The depth of the groove 350 is not particularly limited, and from the viewpoint of strength of the bus bar 310, is desirably 50% or less of a thickness of a portion of the bus bar 310 where the groove 350 is not formed. In the configuration illustrated in FIG. 5, the bus bar 310 can be easily cut.

In a bus bar 410 illustrated in FIG. 8, a groove 450 is formed at a position to be cut by allowing a flat plate to be curved. The position to be cut is typically a bottom portion of the groove 450. The thickness of the bus bar 410 is uniform as a whole. Thus, in the configuration illustrated in FIG. 8, the bus bar 410 has high strength. However, the groove 450 can restrict the distance between adjacent cells in some cases.

It should be noted that in the examples illustrated in FIGS. 7 and 8, the shape of a cross section of each of the groove 350 and the groove 450 is, but not limited to, a U shape. The shape may be, for example, a V shape or an inverted trapezoidal shape. In a case where a groove surface tilts toward the center of the groove, the guide surface can serve as a guide for guiding a cutting blade to a cut position.

In the battery module, it is advantageous that all the bus bar 310 and all the bus bar 410 are provided with information on a cut position.

In the third embodiment, the bus bars 310 and 410 are provided with information on a cut position that avoids damage to the cells 1, and thus, a cut position can be correctly determined by reading the information, and accordingly, the bus bars 310 and 410 can be accurately cut without damage to the cells 1. Thus, the bus bars 310 and 410 can be quickly cut with safety to disassemble the battery module. In the third embodiment, a cut position can be correctly determined by visual observation, and a cutting blade or the like can be easily brought into contact with the cut position. These are advantageous in manually disassembling the battery module.

### OTHER EMBODIMENTS

In another example configuration, a typical bus bar (i.e., bus bar not provided with information on a cut position) is used instead of the bus bar 110 of the first embodiment, the battery module 100 includes the spacers 140 as necessary components, and information on a cut position is provided to side surfaces along the depth direction Y or upper surfaces of the spacers 140. In the case where the spacers 140 are made of resin, a code such as a character code may be formed on the surfaces of the spacers 140 in molding the spacers 140.

### <Method for Disassembling Battery Module>

Next, an embodiment of a method for disassembling a battery module disclosed here will be described in detail with reference to the battery modules according to the first through third embodiments. The method for disassembling a battery module according to this embodiment includes: the step (battery module preparation step) S101 of preparing a battery module in which a plurality of secondary batteries are electrically connected by a bus bar, where each of the plurality of secondary batteries includes a battery case and the battery module is provided with information on a cut position of a bus bar in disassembling the battery module; the step (cut position determination step) S102 of determining the cut position; and the step (bus bar cutting step) S 103 of cutting the bus bar at the cut position.

### (Battery Module Preparation Step S101)

In battery module preparation step S101, the battery module described above is prepared as a battery module. For example, the battery module according to any one of the first through third embodiments is prepared. The battery module is typically in a used state, especially a battery used as a vehicle onboard battery. However, the present disclosure is not limited to this. For example, the battery module may be an unused battery module in which a failure was found before shipment.

### (Cut Position Determination Step S102)

Cut position determination step S102 can be performed by a known method in accordance with the forms of the provided information on the cut position. For example, as described in the first and second embodiments, in the case where a code or an RFID including information on a cut position is provided, the code or the REID is read with a reading device such as a reader. As described in the third embodiment, in the case where the bus bar has a groove, the position of the groove is determined with a displacement sensor. The position of the groove can also be determined by visual observation.

### (Bus Bar Cutting Step S103)

In bus bar cutting step S103, the bus bar can be cut by a known method. For example, the cutting can be performed with a cutter such as a tool with a cutting blade (e.g., electric saw), an electric cutting tool (e.g., grinder or Leutor), a water cutter, or a laser cutter. From the viewpoint of suppressing heat generation in a cut portion, for example, the use of a water cutter is advantageous. In cut position determination step S102 and bus bar cutting step S103, it is advantageous from the viewpoint of higher accuracy that the reading device and the cutter are connected to a computer and made coordinated with each other so that these steps are automatically performed.

With the method for disassembling a battery module according to this embodiment, the bus bar can be accurately cut without damage to secondary batteries.

As described in the third embodiment, in the case where the bus bar has a groove and a surface of the groove tilts toward the center of the groove, it is advantageous to perform the cutting step with a cutting blade. At this time, the tilt groove surface serves as a guide for guiding the cutting blade to a cut position so that accuracy in cutting is thereby increased.

Specific examples of the present disclosure have been described in detail hereinbefore, but are merely illustrative examples, and are not intended to limit the scope of claims. The techniques described in claims include various modifications and changes of the above exemplified specific examples.

That is, the battery module and the method for disassembling the battery module disclosed here are items [1] to [10].
[1] A battery module including:
   a plurality of secondary batteries; and
   a bus bar electrically connecting the plurality of secondary batteries, wherein
   each of the plurality of secondary batteries includes a battery case, and
   the battery module is provided with information on a cut position of the bus bar in
   disassembling the battery module.
[2] The battery module of item [1] in which the information on the cut position is attached to, printed on, or engraved on, the bus bar.
[3] The battery module of item [2] in which the information on the cut position is provided to the bus bar by attaching a seal including the information on the cut position.
[4] The battery module of item [2] or [3] in which the information on the cut position is provided to an upper surface of the bus bar.
[5] The battery module of item [1] in which the information on the cut position is attached to, printed on, or engraved on the battery case.
[6] The battery module of item [5] in which the information on the cut position is provided to the battery case by attaching a seal including the information on the cut position.
[7] The battery module of item [5] or [6] in which the battery case is a flat rectangular shape, and the information on the cut position is provided to a side surface of the battery case along an arrangement direction in which the secondary batteries are arranged.
[8] The battery module of item [1] in which the information on the cut position is provided by a groove disposed at the cut position of the bus bar.
[9] A method for disassembling a battery module including:
   preparing a battery module in which a plurality of secondary batteries are electrically connected by a bus bar, each of the plurality of secondary batteries including a battery case, the battery module being provided with information on a cut position of the bus bar in disassembling the battery module;
   determining the cut position; and
   cutting the bus bar at the cut position.
[10] The method of item [9] in which the information on the cut position is provided by a groove disposed at the cut position of the bus bar, and
   the cutting is performed with a cutting blade.

## Claims

1. A battery module (100) comprising:
a plurality of secondary batteries (1, 201); and
a bus bar (110, 310, 410) electrically connecting the plurality of secondary batteries (1, 201), wherein
each of the plurality of secondary batteries (1, 201) includes a battery case (10, 210), and
the battery module (100) is provided with information on a cut position of the bus bar (110, 310, 410) in disassembling the battery module (100).

2. The battery module (100) according to claim 1, wherein the information on the cut position is attached to, printed on, or engraved on the bus bar (110).

3. The battery module (100) according to claim 2, wherein the information on the cut position is provided to the bus bar (110) by attaching a seal (160) including the information on the cut position.

4. The battery module (100) according to claim 2, wherein the information on the cut position is provided to an upper surface of the bus bar (110).

5. The battery module (100) according to claim 1, wherein the information on the cut position is attached to, printed on, or engraved on the battery case (210).

6. The battery module (100) according to claim 5, wherein the information on the cut position is provided to the battery case (210) by attaching a seal (260) including the information on the cut position.

7. The battery module (100) according to claim 5, wherein
the battery case (210) has a flat rectangular shape, and
the information on the cut position is provided to a side surface of the battery case (210) along an arrangement direction in which the secondary batteries (201) are arranged.

8. The battery module (100) according to claim 1, wherein the information on the cut position is provided by a groove (350, 450) disposed at the cut position of the bus bar (310, 410).

9. A method for disassembling a battery module (100), the method comprising:
preparing a battery module (100) in which a plurality of secondary batteries (1, 201) are electrically connected by a bus bar (110, 310, 410), each of the plurality of secondary batteries (1, 201) including a battery case (10, 210), the battery module (100) being provided with information on a cut position of the bus bar (110, 310, 410) in disassembling the battery module (100);
determining the cut position; and
cutting the bus bar (110, 310, 410) at the cut position.

10. The disassembling method according to claim 9, wherein
the information on the cut position is provided by a groove (350, 450) disposed at the cut position of the bus bar (310, 410), and
the cutting is performed with a cutting blade.
